# FASCICULE DE BREVET EUROPEEN

(11) **EP 1 948 509 B1**
(45) Date de publication et mention de la délivrance du brevet: **26.06.2019**
(21) Numéro de dépôt: 06830996.2
(22) Date de dépôt: 24.10.2006
(51) Int. Cl.: B64D 11/00

(54) **CASIER A BAGAGES PIVOTANT DESTINE A UNE CABINE D'AERONEF**
SCHWENKBARES GEPÄCKFACH FÜR EINE FLUGZEUGKABINE
PIVOTING LUGGAGE BIN FOR AN AIRCRAFT CABIN

(30) Priorité: 28.10.2005 FR 0511028
(43) Date de publication de la demande: 30.07.2008
(73) Titulaire: Airbus, 31700 Blagnac Cédex (FR)
(72) Inventeur: BOCK, Thomas-Mathias, F-31330 Grenade-sur-Garonne (FR)
(74) Mandataire: Santarelli
(86) Numéro de dépôt international: PCT/FR2006/002380
(87) Numéro de publication internationale: WO 2007/048916

(56) Documents cités:
- US-A1- 2002 101 090
- US-A1- 2004 245 897
- US-A1- 2005 064 174

## Description

La présente invention concerne un casier à bagages pivotant destiné à une cabine d'aéronef.

Le domaine de la présente invention est le transport de passagers dans un aéronef. Au cours d'un voyage, des bagages des voyageurs sont disposés dans des soutes de l'aéronef tandis que des bagages plus légers peuvent accompagner les voyageurs dans la cabine de l'aéronef. Dans cette cabine, des rangements sont prévus pour ces bagages, appelés également bagages à main. Le plus souvent, ces rangements sont disposés en partie haute de la cabine de l'aéronef, sous le plafond de cette cabine et au-dessus des sièges destinés à accueillir les passagers.

Il existe deux grands types de rangement pour bagages tels que décrits précédemment. Il y a d'une part des coffres à bagages et d'autre part des casiers à bagages. Un coffre à bagages est un compartiment fixe par rapport à la cabine de l'aéronef et une porte, généralement pivotant, permet l'ouverture et la fermeture de l'accès au compartiment à bagages. Un casier à bagages présente lui aussi un compartiment destiné à recevoir les bagages et comportant un accès. Ce compartiment est ici un compartiment mobile entre une première position sortie dans laquelle l'accès au compartiment est ouvert, permettant l'introduction et le retrait de bagages, et une position escamotée à l'intérieur du plafond de la cabine de l'aéronef dans laquelle l'accès au compartiment est fermé. Le document US2002/0101090 A1 décrit un casier à bagages comportant toutes les caractéristiques techniques du préambule de la revendication 1.

La tendance actuelle, dictée par les compagnies aériennes, est d'augmenter le volume de rangement pour les bagages à main à l'intérieur des cabines d'aéronef. Toutefois, le volume à l'intérieur d'une cabine d'aéronef est limité. Il convient donc de profiter au mieux de l'espace disponible à l'intérieur d'une cabine donnée. En outre, en ce qui concerne les casiers et les coffres à bagages, leurs dimensions sont limitées dans la mesure où les normes prévoient que ces rangements, en position ouverte ou fermée, ne doivent pas gêner la circulation des passagers dans les couloirs de la cabine d'aéronef.

La présente invention a alors pour but de fournir un casier à bagages qui, pour une longueur (mesurée longitudinalement dans la cabine de l'aéronef) donnée, permet un volume de rangement plus important pour les bagages que les casiers connus de l'art antérieur.

À cet effet, elle propose un casier pour bagages, destiné notamment à une cabine d'aéronef, comportant un compartiment présentant une face extérieure inférieure, une face supérieure, une face ouverte, disposée entre la face extérieure inférieure et la face supérieure, et permettant l'accès au compartiment pour le dépôt et le retrait de bagages ou similaires à l'intérieur de celui-ci ainsi qu'un fond, opposé à la face ouverte du compartiment, ce casier étant monté pivotant autour d'un axe de pivotement et étant mobile autour de cet axe entre une position ouverte dans laquelle la face ouverte du compartiment est accessible depuis la cabine et dans laquelle une partie arrière de la face extérieure inférieure est cachée, et une position fermée dans laquelle la face ouverte du compartiment est escamotée et dans laquelle ladite partie arrière de la face extérieure inférieure est visible.

Selon l'invention, ladite partie arrière, cachée lorsque le casier est ouvert, présente une forme cylindrique comportant des génératrices parallèles sensiblement à l'axe de pivotement du casier, et la distance de l'axe de pivotement aux génératrices est croissant depuis le fond du compartiment vers la face ouverte de celui-ci.

Il faut entendre ici par surface cylindrique une surface qui peut être engendrée par le mouvement d'une droite gardant toujours la même orientation. Une telle surface est donc la juxtaposition de lignes parallèles, appelées génératrices, et disposées les unes à côté des autres.

Un casier selon l'invention ne présente donc pas à proximité de son fond, une forme cylindrique circulaire mais une forme rappelant une spirale. Cette nouvelle forme permet d'agrandir le volume intérieur du casier à bagages sans avoir à empiéter sur l'espace réservé à la circulation des passagers dans la cabine de l'aéronef.

Dans un casier pour bagages selon l'invention, un gain de volume sensible est obtenu lorsque la distance de l'axe de pivotement aux génératrices varie d'une extrémité à l'autre de ladite partie arrière d'une valeur comprise entre 5 et 20 cm, de préférence entre 10 et 15 cm.

Pour l'aménagement intérieur d'un casier pour bagages selon l'invention, le compartiment comporte avantageusement une face intérieure inférieure formant un plancher dans ce compartiment ; la face intérieure inférieure du compartiment est sensiblement plane du côté de la face ouverte ; la face intérieure inférieure du compartiment se relève à proximité du fond, et une rainure, dont la concavité est orientée vers la face supérieure du compartiment, est réalisée dans la zone de jonction entre la partie relevée de la face inférieure et le fond. Cet aménagement intérieur du casier à bagages permet notamment de loger une valise non pas à plat sur la face intérieure inférieure du compartiment destiné à recevoir les bagages mais en diagonale dans ce compartiment. Dans un tel casier, pour un meilleur maintien d'une valise, ou d'un autre bagage, on peut prévoir que le bord libre de la face intérieure inférieure du compartiment se trouvant du côté de la face ouverte d'accès au compartiment présente un rebord faisant saillie de la face intérieure inférieure du compartiment en direction de la face supérieure de celui-ci.

La présente invention concerne également une cabine d'aéronef, caractérisée en ce qu'elle comporte au moins un casier pour bagages tel que décrit ci-dessus.

Dans une telle cabine d'aéronef, une bouche d'aération s'étendant le long de la partie arrière de la face extérieure inférieure d'un casier à bagages peut être prévue et cette bouche d'aération présente par exemple à sa sortie un volet mobile. De cette manière, la surface de sortie de la bouche d'aération peut rester constante en asservissant la position du volet à celle du casier à bagages. Dans une forme de réalisation avantageuse, car assez simple à mettre en oeuvre, le volet mobile présente une lame pivotante, s'étendant sous la jonction entre la partie arrière de la face extérieure inférieure et le fond du compartiment, lorsque le casier est fermé, et la lame pivotante est par exemple montée pivotant autour d'un axe longitudinal parallèle sensiblement à l'axe de pivotement du casier à bagages correspondant.

Un volet mobile tel que décrit ci-dessus peut présenter des cales d'espacement du côté du casier à bagages, et des moyens de précontrainte peuvent alors être prévus pour maintenir les cales d'espacement en appui sur la partie arrière de la face extérieure inférieure du casier à bagages. Il est ainsi possible, de façon simple, de garantir une largeur de fente d'aération constante. Lorsque la lame pivotante est montée pivotante autour d'un axe longitudinal parallèle sensiblement à l'axe de pivotement du casier à bagages correspondant, les moyens de précontraintes comportent par exemple un ressort intégré dans l'axe de pivotement de la lame pivotante. On peut par exemple prévoir un ressort au niveau de chaque palier de l'axe de pivotement de la lame pivotante

La présente invention concerne également un aéronef, caractérisé en ce qu'il comporte une cabine telle que décrite ci-dessus.

Des détails et avantages de la présente invention ressortiront mieux de la description qui suit, faite en référence aux dessins schématiques annexés sur lesquels :
La figure 1 est une vue schématique d'un casier selon l'invention en position fermée, tandis que
La figure 2 montre ce casier schématiquement en position ouverte.

Le casier à bagages 2 représenté aux dessins est un casier monté pivotant autour d'un axe de pivotement 4. Il s'agit ici d'un casier à bagages 2 monté dans une cabine d'aéronef. Ce casier est monté dans la partie supérieure de cette cabine, au-dessus de sièges de passagers non représentés. L'axe de pivotement 4 est un axe longitudinal par rapport à la cabine de l'aéronef. On reconnaît sur les dessins le plafond 6 de cette cabine.

Le casier à bagages 2 comporte une face extérieure inférieure 8, un fond 10, une face supérieure 12 et des parois latérales 14. La forme globale de ce casier est sensiblement parallélépipédique avec une face inférieure arrondie. La face opposée au fond 10 est une face entièrement ouverte.

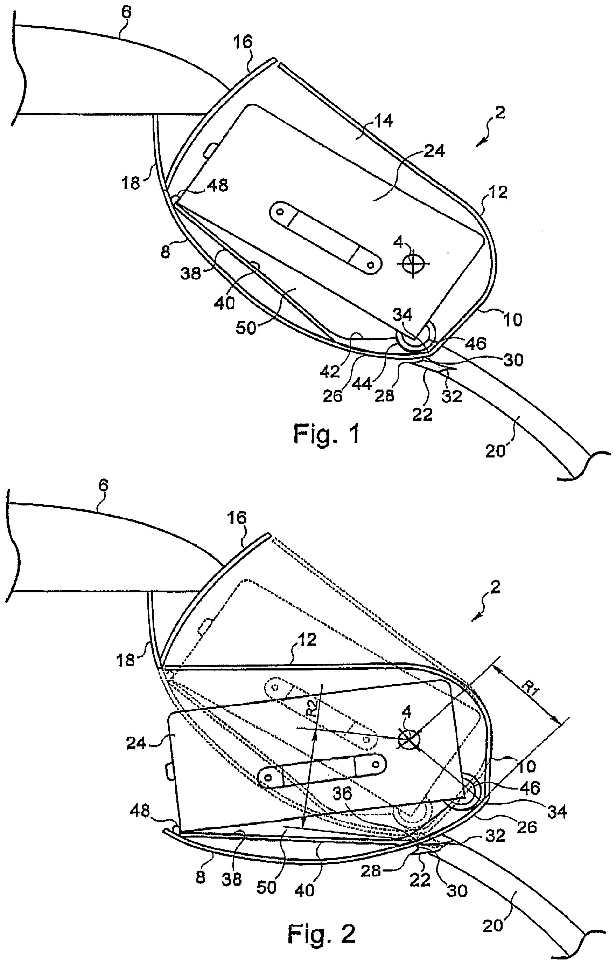

Sur la figure 1, le casier à bagages 2 est représenté dans sa position fermée. Il est alors escamoté dans le plafond 6 de la cabine d'aéronef. À l'intérieur de ce plafond, un volet fixe 16 vient fermer la face ouverte, opposée au fond 10, du casier à bagages. Ce volet fixe 16 prend par exemple, comme représenté aux dessins, la forme d'un tronçon cylindrique circulaire dont l'axe correspond à l'axe de pivotement 4.

Pour des raisons esthétiques, un carénage 18 est prévu au niveau de la liaison entre le plafond et le casier à bagages. En position fermée de ce dernier, le carénage cache entièrement le volet fixe 16 de la vue des passagers se trouvant dans la cabine de l'aéronef. Ce carénage 18, dans la position fermée du casier à bagages prolonge vers le plafond la face extérieure inférieure 8 de ce casier à bagages 2.

En dessous du casier à bagages 2, la face inférieure extérieure 8 est prolongée par une paroi latérale 20 de la cabine de l'aéronef. Habituellement, à la jonction entre le casier à bagages et la paroi latérale 20 de la cabine se trouve une bouche d'aération par laquelle de l'air est généralement envoyé dans la cabine. Dans la présente forme de réalisation selon l'invention, cette bouche d'aération comporte à sa sortie un volet mobile 22.

La figure 2 représente le casier à bagages dans sa position ouverte. Pour passer de la position fermée représentée sur la figure 1 à la position ouverte de la figure 2, le casier à bagages 2 pivote vers le bas autour de son axe de pivotement 4. Dans cette position, le volet fixe 16 ne recouvre plus la face ouverte du casier et cette face ouverte est entièrement dégagée. Un passager peut alors placer à l'intérieur du casier une valise 24 ou l'en retirer.

La face extérieure inférieure 8 du casier à bagages 2 présente une zone se trouvant du côté du fond 10, appelée partie arrière 26, qui est visible depuis l'intérieur de la cabine d'aéronef lorsque le casier à bagages 2 est dans sa position fermée (figure 1) et qui est cachée par le volet mobile 22 et la paroi latérale 20 de la cabine lorsque le casier à bagages 2 est dans sa position ouverte.

La partie arrière 26 de la face extérieure inférieure 8 présente une forme cylindrique. Une telle surface est une surface qui peut être engendrée par le mouvement d'une droite, appelée également génératrice, gardant toujours la même direction. Une telle surface est donc une succession de droites, appelées génératrices, toutes parallèles et disposées les unes à côté des autres. La partie arrière 26 présente la forme d'une surface cylindrique dont les génératrices sont parallèles à l'axe de pivotement 4 et telles que la distance d'une génératrice à l'axe de pivotement 4 est croissante depuis le fond 10 du casier à bagages 2 vers la face ouverte avant de celui-ci.

Lorsque le casier à bagages s'ouvre et se ferme, le volet mobile 22 reste en appui sur la face extérieure inférieure 8 du casier à bagages. Ce volet mobile 22 comporte une lame profilée 28 s'étendant parallèlement à l'axe de pivotement 4 ainsi que des cales d'espacement 30 qui permettent d'assurer de garder pour la bouche d'aération une largeur de fente de sortie d'air constante, et ainsi conserver un même débit d'air que le casier à bagages 2 soit en position ouverte ou fermée (ou intermédiaire).

La lame profilée 28 (et aussi donc le volet mobile 22) est montée pivotante autour d'un second axe de pivotement 32 parallèle à l'axe de pivotement 4 du casier à bagages 2. Ce second axe de pivotement 32 est porté par la paroi latérale 20 de la cabine de l'aéronef. Il comporte des moyens de précontrainte, non représentés, maintenant le volet mobile 22 toujours en appui par l'intermédiaire des cales d'espacement 30 sur la partie arrière 26 de la face extérieure inférieure 8 du casier à bagages 2. Ces moyens de précontrainte peuvent comporter par exemple un ressort associé à chaque palier du second axe de pivotement 32 de manière à exercer un couple de rappel sur le volet mobile 22.

À titre d'exemple, on considère d'une part une première génératrice 34 de la partie arrière 26 correspondant à la génératrice sur laquelle les cales d'espacement 30 reposent lorsque le casier à bagages 2 est dans sa position ouverte et d'autre part une seconde génératrice 36 de la partie arrière 26 correspondant à la génératrice sur laquelle les cales d'espacement 30 reposent lorsque le casier à bagages 2 est dans sa position fermée. La première génératrice 34 est distante de l'axe de pivotement 4 du casier à bagages 2 d'une distance R1 tandis que la seconde génératrice est distante de cet axe de pivotement 4 d'une distance R2. Selon l'invention, R2 > R1. La valeur R2-R1 est comprise par exemple entre 5 et 20 cm, de préférence entre 10 et 15 cm.

Avec un tel casier à bagages, il apparaît clairement que le volume du coffre à bagages 2 est augmenté en conservant une même profondeur, c'est-à-dire la distance séparant le fond 10 de la face ouverte du compartiment à bagages.

Pour mieux mettre à profit le volume intérieur augmenté du casier à bagages 2, un aménagement de l'intérieur du compartiment recevant une valise 24 est proposé.

Un plancher est disposé dans le compartiment destiné à recevoir les bagages. Ce plancher forme la face intérieure inférieure 38 du casier à bagages 2. Cette face intérieure inférieure 38 présente une partie plane 40 du côté de la face ouverte du casier. Cette partie plane 40 s'étend par exemple sur 60 à 85 % de la surface de la face intérieure inférieure 38. Dans la forme de réalisation représentée aux dessins, elle s'étend sur environ 70% de la profondeur du casier à bagages. Ensuite, en se rapprochant du fond 10 du casier à bagages 2, la face intérieure inférieure 38 présente une partie relevée 42 orientée vers la face supérieure 12. Ainsi, sur les figures ci-jointes correspondant sensiblement à une coupe transversale, la face intérieure inférieure 38 du casier à bagages 2 présente une forme coudée.

L'extrémité libre de la partie relevée 42 porte une rainure 44. Cette dernière se trouve donc à proximité immédiate du fond 10. Cette rainure 44 est de forme cylindrique circulaire. Sa concavité est orientée vers la face supérieure 12 du casier à bagages 2. Cette rainure 44 est de dimension adaptée pour recevoir une roulette 46 de valise 24. Ainsi, le rayon de courbure de la rainure 44 est par exemple de l'ordre de 3 à 10 cm.

Actuellement, une très grande majorité de valises présente des roulettes 46. La mise en place d'une valise 24 à roulettes 46 s'effectue alors de la manière suivante. Le casier à bagages 2 est disposé dans sa position ouverte représentée sur la figure 2. La valise 24 est alors présentée de telle sorte que ces roulettes 46 sont introduites en premier à l'intérieur du casier à bagages 2 et viennent rouler sur la partie plane 40 de la face intérieure inférieure 38 du casier à bagages 2. En arrivant vers le fond 10 du casier à bagages, la partie relevée 42 de la face intérieure inférieure 38 guide les roulettes 46 vers la rainure 44. La valise 24 est alors en place dans le casier à bagages 2. Pour le confort du passager, la partie relevée 40 se relève progressivement de la partie plane 40 jusqu'à la rainure 44 pour que la valise 24 atteigne la rainure 44 en douceur et sans à-coups. Ce processus de chargement est naturel pour le passager qui préfère disposer la poignée de son bagage (généralement opposée à ses roulettes) du côté accessible du casier.

Une fois en place dans son compartiment, les roulettes 46 de la valise 24 se trouvent à environ 5 à 30 cm au-dessus du niveau de la partie plane 40 de la face intérieure inférieure 38. La valise 24 est alors retenue dans ce casier grâce à la coopération des roulettes 46 et de la rainure 44.

La partie plane 40 de la face intérieure inférieure 38 du casier à bagages 2 est de préférence sensiblement horizontale lorsque le casier à bagages 2 est dans sa position ouverte. On considère ici que l'aéronef est posé au sol. Dans ce cas, le sol de la cabine de l'aéronef est lui aussi sensiblement horizontal. Ainsi, par rapport à la cabine de l'aéronef, on peut considérer que la partie plane 40 de la face intérieure inférieure 38 du casier à bagages 2 est sensiblement parallèle, lorsque le casier à bagages est en position ouverte, au sol (et/ou au plafond) de la cabine de l'aéronef.

Pour mieux retenir la valise 24 à l'intérieur du casier à bagages 2, il est également prévu de munir le bord libre de la face intérieure inférieure 38 se trouvant du côté de la face ouverte du casier à bagages 2 d'un rail profilé 48 formant une légère saillie au dessus de la partie plane 40 de la face intérieure inférieure 38 du casier à bagages 2. Ce rail profilé 48 forme ainsi un obstacle pour tout objet se trouvant sur la face intérieure inférieure 38 du casier à bagages 2. Afin d'éviter d'abîmer les bagages ou autres objets trouvant leur place dans le casier à bagages 2, et surtout pour éviter toute blessure aux passagers se servant du casier à bagages 2, le rail profilé 48 présente une forme plutôt arrondie.

On peut ici imaginer une forme de réalisation d'un casier à bagages dans lequel seul un rail profilé serait utilisé pour maintenir une valise en diagonale dans le compartiment sans avoir de face intérieure inférieure présentant une partie plane et une partie relevée. Bien entendu, un casier selon l'invention peut également ne pas comporter de rail profilé de retenue.

Une telle forme de réalisation d'un casier à bagages permet de loger des bagages de taille plus importante. Par rapport à un casier à bagages de l'état de l'art, le fait de disposer dans le casier à bagages 2 un plancher tel que décrit ci-dessus permet un gain de l'ordre de 3" (soit environ 7 à 8 cm) en encombrement transversal. Il faut rappeler ici que les casiers à bagages, dans une cabine d'aéronef, même en position ouverte, ne doivent pas faire obstacle au déplacement des passagers circulant dans les couloirs prévus à cet effet. Les casiers à bagages ne doivent donc pas faire saillie au-delà des sièges de la cabine, au-dessus des couloirs de circulation.

Grâce au gain de place réalisé, d'une part par la forme particulière de la face extérieure inférieure du casier et d'autre part par les moyens permettant de disposer une valise non pas à plat mais diagonalement dans le compartiment de rangement, il devient possible de disposer une valise 24 de dimensions supérieures à celle d'une valise correspondant au format maximal accepté en général par les compagnies aériennes dans la cabine d'aéronef (appelé généralement "traveller pro") transversalement dans le casier à bagages 2 alors que dans les casiers de l'art antérieur le rangement de telles valises devait être réalisé longitudinalement. Le gain de place est très sensible. L'espace suffisant pour accueillir quatre valises de format traveller pro, voire plus grandes, dans un casier selon l'invention ne peut recevoir, avec un casier de l'art antérieur, qu'à peine deux valises du format traveller pro.

Le volume 50 se trouvant entre la face intérieure inférieure 38 du casier à bagages 2 selon l'invention et la valise 24 n'est pas un espace perdu, bien au contraire. Un passager pourra mettre à profit ce volume pour y ranger en toute sécurité divers objets de petite taille et notamment une veste ou similaire. Ce volume 50 étant bien délimité, les objets qui y sont placés y sont également retenus.

La présente invention ne se limite pas à la forme de réalisation préférée décrite ci-dessus à titre d'exemple non limitatif. Elle concerne également toutes les variantes à la portée de l'homme du métier, dans le cadre des revendications ci-après.

## Revendications

1. Casier pour bagages (2), destiné notamment à une cabine d'aéronef, comportant un compartiment présentant une face extérieure inférieure (8), une face supérieure (12), une face ouverte, disposée entre la face extérieure inférieure (8) et la face supérieure (12), et permettant l'accès au compartiment pour le dépôt et le retrait de bagages (24) ou similaires à l'intérieur de celui-ci ainsi qu'un fond (10), opposé à la face ouverte du compartiment, ce casier étant monté pivotant autour d'un axe de pivotement (4) et étant mobile autour de cet axe entre une position ouverte dans laquelle la face ouverte du compartiment est accessible depuis la cabine et dans laquelle une partie arrière (26) de la face extérieure inférieure (8) est cachée, et une position fermée dans laquelle la face ouverte du compartiment est escamotée et dans laquelle ladite partie arrière (26) de la face extérieure inférieure (8) est visible,
dans lequel ladite partie arrière (26), cachée lorsque le casier est ouvert, présente une forme cylindrique comportant des génératrices (34, 36) parallèles sensiblement à l'axe de pivotement (4) du casier, et la distance (R1, R2) de l'axe de pivotement (4) aux génératrices (34, 36) est croissant depuis le fond (10) du compartiment vers la face ouverte de celui-ci,
**caractérisé en ce que** le compartiment comporte une face intérieure inférieure (38) formant un plancher dans ce compartiment, **en ce que** la face intérieure inférieure (38) du compartiment est sensiblement plane du côté de la face ouverte, **en ce que** la face intérieure inférieure (38) du compartiment se relève à proximité du fond (10), et **en ce qu'**une rainure (44), dont la concavité est orientée vers la face supérieure (12) du compartiment, est réalisée dans la zone de jonction entre la partie relevée (42) de la face inférieure et le fond (10).

2. Casier pour bagages (2) selon la revendication 1, **caractérisé en ce que** la distance (R1, R2) de l'axe de pivotement (4) aux génératrices (34, 36) varie d'une extrémité à l'autre de ladite partie arrière d'une valeur comprise entre 5 et 20 cm, de préférence entre 10 et 15 cm.

3. Casier pour bagages (2) selon la revendication 1 ou 2, **caractérisé en ce que** le bord libre de la face intérieure inférieure (38) du compartiment se trouvant du côté de la face ouverte d'accès au compartiment présente un rebord (48) faisant saillie de la face intérieure inférieure (38) du compartiment en direction de la face supérieure (12) de celui-ci.

4. Cabine d'aéronef, **caractérisée en ce qu'**elle comporte au moins un casier pour bagages (2) selon l'une des revendications 1 à 3.

5. Cabine d'aéronef selon la revendication 4, **caractérisée en ce qu'**elle comporte en outre une bouche d'aération s'étendant le long de la partie arrière (26) de la face extérieure inférieure (8) d'un casier à bagages (2), et **en ce que** la bouche d'aération présente à sa sortie un volet mobile (22).

6. Cabine d'aéronef selon la revendication 5, **caractérisée en ce que** le volet mobile (22) présente une lame pivotante (28), s'étendant sous la jonction entre la partie arrière (26) de la face extérieure inférieure (8) et le fond (10) du compartiment, lorsque le casier est fermé, et **en ce que** la lame pivotante (28) est montée pivotant autour d'un axe longitudinal (32) parallèle sensiblement à l'axe de pivotement (4) du casier à bagages (2) correspondant.

7. Cabine d'aéronef selon l'une des revendications 5 ou 6, **caractérisée en ce que** le volet mobile (22) présente des cales d'espacement (30) du côté du casier à bagages (2), et **en ce que** des moyens de précontrainte maintiennent les cales d'espacement (30) en appui sur la partie arrière (26) de la face extérieure inférieure (8) du casier à bagages (2).

8. Cabine d'aéronef selon la revendication 7 dans laquelle la lame pivotante (28) est montée pivotante autour d'un axe longitudinal (32) parallèle sensiblement à l'axe de pivotement (4) du casier à bagages (2) correspondant, **caractérisée en ce que** les moyens de précontraintes comportent un ressort intégré dans l'axe de pivotement (32) de la lame pivotante (28).

9. Aéronef, **caractérisé en ce qu'**il comporte une cabine selon l'une des revendications 4 à 8.

## Patentansprüche

1. Gepäckfach (2), das insbesondere für eine Luftfahrzeugkabine bestimmt ist und einen Raum umfasst, der eine untere Außenseite (8), eine obere Seite (12), eine offene Seite, die zwischen der unteren Außenseite (8) und der oberen Seite (12) angeordnet ist und den Zugang zu dem Raum zur Ablage und Entnahme von Gepäckstücken (24) oder Ähnlichem im Inneren desselben ermöglicht, sowie eine der offenen Seite des Raumes gegenüberliegende Rückwand (10) aufweist, wobei dieses Fach um eine Schwenkachse (4) schwenkbar gelagert ist und um diese Achse beweglich ist zwischen einer offenen Position, in welcher die offene Seite des Raumes von der Kabine aus zugänglich ist und in welcher ein hinterer Teil (26) der unteren Außenseite (8) verborgen ist, und einer geschlossenen Position, in welcher die offene Seite des Raumes weggeklappt ist und in welcher der hintere Teil (26) der unteren Außenseite (8) sichtbar ist,
wobei der hintere Teil (26), der verborgen ist, wenn das Fach offen ist, eine zylindrische Form mit Erzeugenden (34, 36) aufweist, die im Wesentlichen parallel zur Schwenkachse (4) des Faches sind, und der Abstand (R1, R2) der Schwenkachse (4) von den Erzeugenden (34, 36) von der Rückwand (10) des Raumes zur offenen Seite desselben hin zunimmt, **dadurch gekennzeichnet, dass** der Raum eine untere Innenseite (38) aufweist, die einen Boden in diesem Raum bildet, dadurch, dass die untere Innenseite (38) des Raumes auf der Seite der offenen Seite im Wesentlichen eben ist, dadurch, dass sich die untere Innenseite (38) des Raumes in der Nähe der Rückwand (10) erhebt, und dadurch, dass eine Rille (44), deren Konkavität der oberen Seite (12) des Raumes zugewandt ist, in dem Verbindungsbereich zwischen dem erhobenen Teil (42) der unteren Seite und der Rückwand (10) ausgebildet ist.

2. Gepäckfach (2) nach Anspruch 1, **dadurch gekennzeichnet, dass** sich der Abstand (R1, R2) der Schwenkachse (4) von den Erzeugenden (34, 36) von einem Ende des hinteren Teils zum anderen um einen Wert ändert, der zwischen 5 und 20 cm, vorzugsweise zwischen 10 und 15 cm liegt.

3. Gepäckfach (2) nach Anspruch 1 oder 2, **dadurch gekennzeichnet, dass** der freie Rand der unteren Innenseite (38) des Raumes, der sich auf der Seite der offenen Zugangsseite des Raumes befindet, eine Randleiste (48) aufweist, die von der unteren Innenseite (38) des Raumes aus in Richtung der oberen Seite (12) desselben vorsteht.

4. Luftfahrzeugkabine, **dadurch gekennzeichnet, dass** sie wenigstens ein Gepäckfach (2) nach einem der Ansprüche 1 bis 3 aufweist.

5. Luftfahrzeugkabine nach Anspruch 4, **dadurch gekennzeichnet, dass** sie außerdem eine Lüftungsöffnung aufweist, die sich entlang des hinteren Teils (26) der unteren Außenseite (8) eines Gepäckfaches (2) erstreckt, und dadurch, dass die Lüftungsöffnung an ihrem Ausgang eine bewegliche Klappe (22) aufweist.

6. Luftfahrzeugkabine nach Anspruch 5, **dadurch gekennzeichnet, dass** die bewegliche Klappe (22) eine schwenkbare Platte (28) aufweist, die sich unter der Verbindungsstelle zwischen dem hinteren Teil (26) der unteren Außenseite (8) und der Rückwand (10) des Raumes erstreckt, wenn das Fach geschlossen ist, und dadurch, dass die schwenkbare Platte (28) um eine Längsachse (32) schwenkbar gelagert ist, die im Wesentlichen parallel zur Schwenkachse (4) des entsprechenden Gepäckfaches (2) ist.

7. Luftfahrzeugkabine nach einem der Ansprüche 5 oder 6, **dadurch gekennzeichnet, dass** die bewegliche Klappe (22) Abstandshalter (30) auf der Seite des Gepäckfaches (2) aufweist, und dadurch, dass Vorspannmittel die Abstandshalter (30) in Anlage am hinteren Teil (26) der unteren Außenseite (8) des Gepäckfaches (2) halten.

8. Luftfahrzeugkabine nach Anspruch 7, wobei die schwenkbare Platte (28) um eine Längsachse (32) schwenkbar gelagert ist, die im Wesentlichen parallel zur Schwenkachse (4) des entsprechenden Gepäckfaches (2) ist, **dadurch gekennzeichnet, dass** die Vorspannmittel eine Feder aufweisen, die in die Schwenkachse (32) der schwenkbaren Platte (28) integriert ist.

9. Luftfahrzeug, **dadurch gekennzeichnet, dass** es eine Kabine nach einem der Ansprüche 4 bis 8 aufweist.

## Claims

1. Luggage bin (2), intended in particular for an aircraft cabin, comprising a compartment having a lower outer face (8), an upper face (12), an open face arranged between the lower outer face (8) and the upper face (12) and allowing access to the compartment for depositing and retrieving luggage (24) or the like within said compartment, and also an end face (10) opposite to the open face of the compartment, this bin being pivotably mounted about a pivot axis (4) and being movable about this axis between an open position, in which the open face of the compartment is accessible from the cabin and in which a rear part (26) of the lower outer face (8) is concealed, and a closed position, in which the open face of the compartment is retracted and in which said rear part (26) of the lower outer face (8) is visible,
wherein said rear part (26), which is concealed when the bin is open, has a cylindrical shape comprising generatrices (34, 36) substantially parallel to the pivot axis (4) of the bin, and the distance (R1, R2) from the pivot axis (4) to the generatrices (34, 36) increases from the end face (10) of the compartment towards the open face thereof,
**characterized in that** the compartment comprises a lower inner face (38) forming a floor in this compartment, **in that** the lower inner face (38) of the compartment is substantially planar on the open face side, **in that** the lower inner face (38) of the compartment rises in the vicinity of the end face (10), and **in that** a groove (44) whose concavity is oriented towards the upper face (12) of the compartment is formed in the junction region between the raised part (42) of the lower face and the end face (10).

2. Luggage bin (2) according to Claim 1, **characterized in that** the distance (R1, R2) from the pivot axis (4) to the generatrices (34, 36) varies from one end to the other of said rear part by a value of between 5 and 20 cm, preferably between 10 and 15 cm.

3. Luggage bin (2) according to Claim 1 or 2, **characterized in that** the free edge of the lower inner face (38) of the compartment situated on the open face side for access to the compartment has a rim (48) projecting from the lower inner face (38) of the compartment in the direction of the upper face (12) thereof.

4. Aircraft cabin, **characterized in that** it comprises at least one luggage bin (2) according to one of Claims 1 to 3.

5. Aircraft cabin according to Claim 4, **characterized in that** it additionally comprises a ventilation opening extending along the rear part (26) of the lower outer face (8) of a luggage bin (2), and **in that** the ventilation opening has a movable flap (22) at its outlet.

6. Aircraft cabin according to Claim 5, **characterized in that** the movable flap (22) has a pivoting blade (28) extending below the junction between the rear part (26) of the lower outer face (8) and the end face (10) of the compartment when the bin is closed, and **in that** the pivoting blade (28) is pivotably mounted about a longitudinal axis (32) substantially parallel to the pivot axis (4) of the corresponding luggage bin (2).

7. Aircraft cabin according to either of Claims 5 and 6, **characterized in that** the movable flap (22) has spacer blocks (30) on the luggage bin (2) side, and **in that** prestressing means maintain the spacer blocks (30) in bearing contact with the rear part (26) of the lower outer face (8) of the luggage bin (2).

8. Aircraft cabin according to Claim 7, in which the pivoting blade (28) is pivotably mounted about a longitudinal axis (32) substantially parallel to the pivot axis (4) of the corresponding luggage bin (2), **characterized in that** the prestressing means comprise a spring integrated into the pivot axis (32) of the pivoting blade (28).

9. Aircraft, **characterized in that** it comprises a cabin according to one of Claims 4 to 8.
